# EUROPÄISCHE PATENTSCHRIFT

(11) **EP 2 103 460 B1**
(45) Veröffentlichungstag und Bekanntmachung des Hinweises auf die Patenterteilung: **11.05.2011**
(21) Anmeldenummer: 09002432.4
(22) Anmeldetag: 20.02.2009
(51) Int. Cl.: B60H 1/00

(54) **Klimaanlage, insbesondere für ein Fahrzeug**
Air conditioning unit for a vehicle
Dispositif de climatisation pour un véhicule

(30) Priorität: 19.03.2008 DE 102008015059
(43) Veröffentlichungstag der Anmeldung: 23.09.2009
(73) Patentinhaber: Behr GmbH & Co. KG, 70469 Stuttgart (DE)
(72) Erfinder: Jochmann, Paul, 70191 Stuttgart (DE); Schmalzried, Michael, 70197 Stuttgart (DE)
(74) Vertreter: Grauel, Andreas

(56) Entgegenhaltungen:
- EP-B- 1 577 131
- DE-A1- 2 307 439
- DE-C1- 4 436 942
- DE-C1- 19 524 200
- FR-A- 2 773 210

## Beschreibung

Die Erfindung betrifft eine Klimaanlage, insbesondere für ein Fahrzeug, gemäß dem Oberbegriff des Anspruches 1.

Auf Grund immer kleinerer und kompakterer Fahrzeug-Klimaanlagen und möglichst geringer Luftkanallängen treten insbesondere bei den Mitteldüsen Probleme in Bezug auf die Vermischung der temperierten, von der Klimaanlage kommenden Luft auf, so dass aus den Düsen häufig Luft mit kalten und warmen Strähnen austritt.

Bei Klimaanlagen werden zur Regelung der Luftverteilung zwischen einem Kaltluftpfad (führt üblicherweise durch den Verdampfer und einen Kaltluftbypass) und einem Warmluftpfad (vom Verdampfer kommende Luft wird üblicherweise durch eine Heizeinrichtung geleitet) Klappen verwendet, welche eine starre Klappenfläche aufweisen und um Schwenkachsen verschwenkbar oder mittels Kurvenbahnen und hierin geführten, an den Seiten der Klappen vorstehenden Zapfen verschiebbar im Luftführungsgehäuse der Klimaanlage angeordnet sind.

Eine Klimaanlage mit einer aus zwei schwenkbaren Klappenflügeln bestehenden Klappenanordnung zum wahlweisen Schließen und Öffnen zweier weiterführender Luftkanäle ist in der DE 44 36 942 C1 offenbart, wobei die beiden Klappenflügel unter Einschluss eines Winkels gelenkig miteinander verbunden und ortsfest abgestützt sind. Die weiterführenden Luftkanäle sind hierbei im Wesentlichen miteinander fluchtend angeordnet, wobei die Klappenanordnung zwischen den Öffnungen derselben angeordnet ist. Der zuführende Luftkanal stößt im rechten Winkel zu den beiden zuführenden Luftkanälen, wobei die Luft in den offenen Winkel der Klappenflügel geleitet wird.

Aus der DE 2 307 439 A1 ist eine Schwenkdüse mit Klappenventilanordnung bekannt, wobei zwei Klappenflügel eine gemeinsame Schwenkachse aufweisen, um die sie in entgegengesetzter Richtung verschwenkbar angeordnet sind. Ein derartiges Element wird auch als Schmetterlingsflügel-Auslenkelement bezeichnet. Die Anströmung erfolgt von der Seite der Schwenkachse her. Hierbei treten jedoch Probleme bei der Durchmischung auf Grund des hinter den Klappenflügeln angeordneten Totraums auf.

Die EP 1 577 131 B1 offenbart eine als Schmetterlingsflügel-Auslenkelement ausgebildete Steuerungseinrichtung zur Steuerung der Durchflussmenge eines Fluids durch einen Strömungskanal.

DE 195 24 200 offenbart eine Klimaanlage nach dem Öberbegriff des Anspruchs 1.

Es ist Aufgabe der Erfindung, eine verbesserte Klimaanlage zur Verfügung zu stellen. Insbesondere soll der benötigte Bauraum möglichst gering gehalten werden können, wobei eine Beeinträchtigung der Vermischung von kalter und warmer Luft insbesondere im Bereich der Mitteldüse vermieden werden soll.

Diese Aufgabe wird gelöst durch eine Klimaanlage mit den Merkmalen des Anspruches 1. Vorteilhafte Ausgestaltungen sind Gegenstand der Unteransprüche.

Erfindungsgemäß ist eine Klimaanlage, insbesondere für ein Fahrzeug, vorgesehen, aufweisend mindestens einen ersten Luftpfad und mindestens einen zweiten Luftpfad, welche nebeneinander angeordnet sind, und die Luftpfade durch Regelelemente regelbar sind, wobei im ersten Luftpfad eine Schmetterlingsklappe mit einem Paar gegeneinander um eine gemeinsame Schwenkachse verschwenkbarer Klappenflügel angeordnet ist, die Schwenkachse luftanströmseitig angeordnet ist, die Klappenflügel den ersten Luftpfad im vollständig geöffneten Zustand der Klappenflügel maximal verschließen, und zumindest im teilweise geöffneten Zustand der Klappenflügel, in welchem die Klappenflügel zwischen sich einen Totraum mit Unterdruck bilden, auf mindestens einer Seite der Schmetterlingsklappe ein Spalt oder Kanal geöffnet ist, über welchen durch den Unterdruck Luft aus dem mindestens einen zweiten Luftpfad in den durch die Klappenflügel gebildeten Totraum unter seitlicher Umgehung der Klappenflügel ansaugbar ist. Der Spalt ist hierbei zwischen einer Wandfläche und einem Ende der Klappenflügel gebildet, welches zumindest im Wesentlichen in Strömungsrichtung der Luft verläuft.

Besonders bevorzugt sind zwei zweite Luftpfade vorgesehen, wobei der erste Luftpfad zwischen den beiden zweiten Luftpfaden angeordnet ist. Insbesondere bevorzugt kann von beiden zweiten Luftpfaden Luft in den Totraum hinter der Schmetterlingsklappe des ersten Luftpfads gelangen.

Die zweiten Luftpfade sind hierbei besonders bevorzugt in Verlängerung der Schwenkachse der Schmetterlingsklappe des ersten Luftpfads angeordnet. Durch das Vorsehen einer seitlichen Einströmung in den Totraum der Klappe kann in den Kernbereich des entsprechenden Luftstroms mit einer ersten Temperatur Luft mit einer anderen, zweiten Temperatur eingemischt werden, so dass sich insgesamt eine Temperaturverteilung über den Querschnitt des Luftstroms ergibt, deren Maximum (bzw. Minimum) zweigeteilt und außermittig vorgesehen ist, und bei der im mittleren Bereich kein Maximum (bzw. Minimum) der Temperatur vorherrscht. Die Wirkung der Klappenflügel ist insbesondere im Falle einer Mischstellung mit halb geöffneter Klappe in Folge eines stark vergrößerten Unterdruckbereichs und starker Querströmung auch noch deutlich luftabströmseitig der Klappe zum Temperaturausgleich sehr vorteilhaft. Die unterschiedlich temperierten Luftströme werden infolge des seitlichen Einströmens des einen Luftstroms in den Kernbereich des anderen Luftstroms und durch die Ablösewirbel am luftabströmseitigen Ende der Klappenflügel gut vermischt. Insbesondere bei bauraumbedingt kleinen Mischräumen kann trotz kurzer Luftkanallängen zu den Mitteldüsen auf diese Weise eine ausreichende Vermischung von kalter und warmer Luft erfolgen, so dass der Komfort der Insassen ohne zusätzliche kostenintensive Maßnahmen gewährleistet werden kann.

Bevorzugt können die Klappenflügel der Schmetterlingsklappe eine Winkelstellung von zwischen 0° und 180° zueinander einnehmen.

Bei den Klappen, die in den anderen Luftpfaden angeordnet sind, sind bevorzugt Klappen mit starren Klappenflächen vorgesehen. Hierbei kann es sich beispielsweise um einflügelige Klappen als auch um herkömmliche Schmetterlingsklappen handeln.

Bevorzugt ist in Luftströmungsrichtung gesehen hinter den Klappen ein Mischraum ausgebildet, in dessen Wandbereich eine Mehrzahl von Austrittsöffnungen zu Luftkanälen vorgesehen ist. Insbesondere bevorzugt ist in Verlängerung der Schmetterlingsklappe in Strömungsrichtung der Luft eine Austrittsöffnung zu einer Mitteldüse vorgesehen.

Bei teilweise geöffneten Klappenflügeln ist bevorzugt auf beiden Seiten der Schmetterlingsklappe jeweils ein Spalt und/oder Kanal geöffnet, über welchen Luft aus mindestens einem der zweiten Luftpfade in den durch die Klappenflügel gebildeten Totraum ansaugbar ist. Der Kanal kann im Gehäuse ausgebildet sein, jedoch kann auch direkt durch die Achse der Schmetterlingsklappe Luft in den mittleren Bereich gelangen, wenn diese hohl ausgebildet ist und in Richtung Totraum Öffnungen aufweist.

Die beiden gegeneinander um ihre gemeinsame Schwenkachse verschwenkbaren Klappenflügel der Schmetterlingsklappe sind bevorzugt in jeder Klappenstellung spiegelbildlich beiderseits einer stationären Mittelebene angeordnet, d.h. die beiden Klappenflügel werden jeweils um einen betragsmäßig einander entsprechenden Winkel um ihre gemeinsame Schwenkachse verschwenkt. Dies kann mittels eines Getriebes erfolgen, wie es beispielsweise in der EP 1 577 131 B1 offenbart ist.

Bei einer mehrzonigen Ausführungsform der Klimaanlage ist bevorzugt eine Trennwand zur Unterteilung des Luftstroms in einen dem Frontbereich zuzuführenden Teilluftstrom und einen dem Fondbereich zuzuführenden Teilluftstrom vorgesehen, wobei die Schmetteringsklappe im dem Frontbereich zuzuführenden Teilluftstrom angeordnet ist.

Die im ersten Luftpfad angeordnete Schwenkachse der Schmetterlingsklappe ist vorzugsweise in einer Ebene, insbesondere in der Mittelebene, zwischen den beiden benachbarten Luftpfaden verlaufend angeordnet.

Eine entsprechende Klappenanordnung muss nicht notwendigerweise zur Regelung und Mischung unterschiedlich temperierter Luftströme, insbesondere bei einer Klimaanlage eines Fahrzeugs, dienen, sondern kann auch zur Regelung und Mischung von unterschiedlichen Medienströmen (Flüssigkeiten oder Gase) dienen, so dass neben oder anstelle der Temperaturverteilung die Medienverteilung über den Strömungsquerschnitt gleichmäßiger wird.

Im Folgenden wird die Erfindung anhand mehrerer Ausführungsbeispiele, teilweise unter Bezugnahme auf die Zeichnung, im Einzelnen erläutert. Es zeigen:
- Fig. 1: eine schematische Schnittdarstellung durch den zentralen Bereich einer Klimaanlage eines Kraftfahrzeugs gemäß dem ersten Ausführungsbeispiel bei einer Mischtemperie- rung,
- Fig. 2: eine Draufsicht auf die Klimaanlage von Fig. 1,
- Fig. 3: eine schematische ausschnittsweise Darstellung entspre- chend Fig. 1 des Strömungsverlaufs der Luft bei einer Mischtemperierung,
- Fig. 4: eine schematische ausschnittsweise Darstellung entspre- chend Fig. 2 des Strömungsverlaufs der Luft bei einer Mischtemperierung,

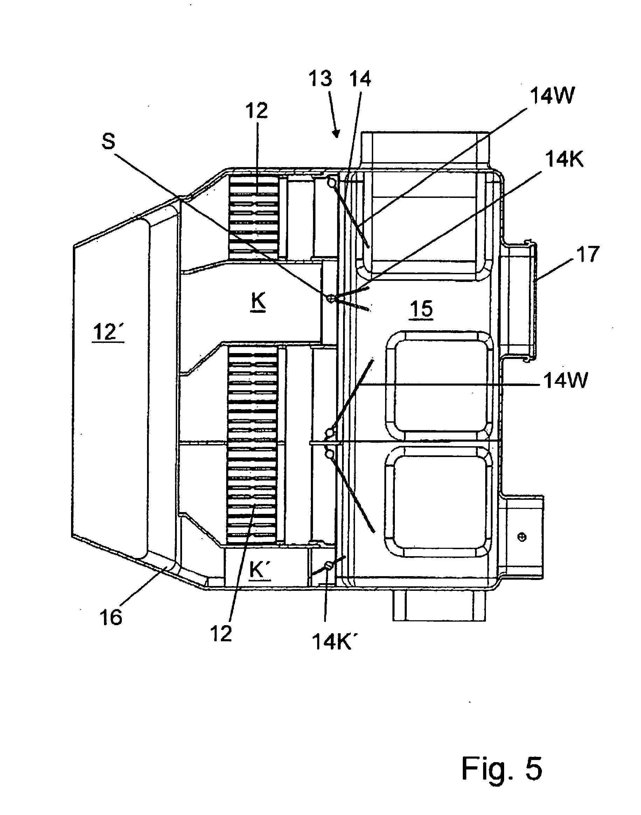

- Fig. 5: einen Schnitt durch einen Teil einer Klimaanlage gemäß dem zweiten Ausführungsbeispiel bei einer ersten Misch- temperierung,

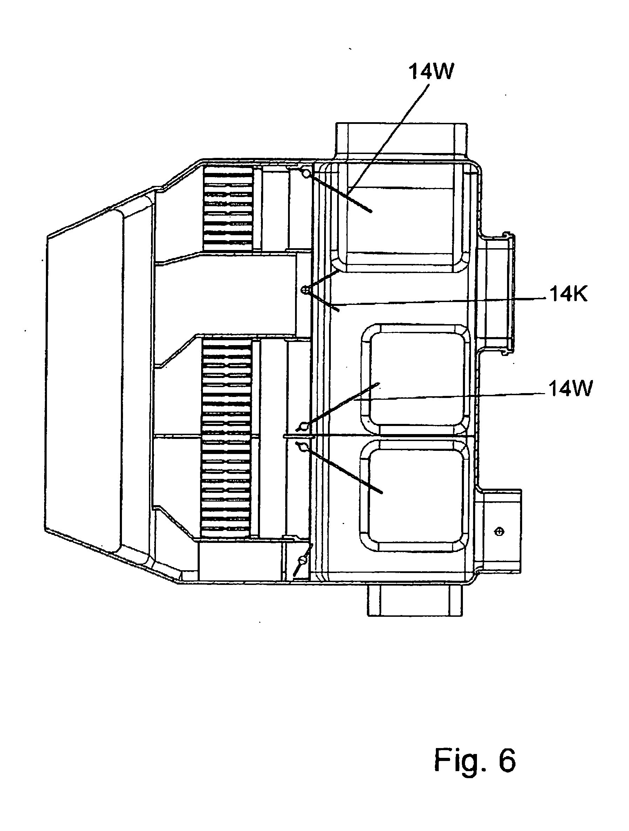

- Fig. 6: eine Fig. 5 entsprechende Darstellung bei einer zweiten Mischtemperierung,
- Fig. 7: eine Fig. 5 entsprechende Darstellung bei einem reinen Heizbetrieb,

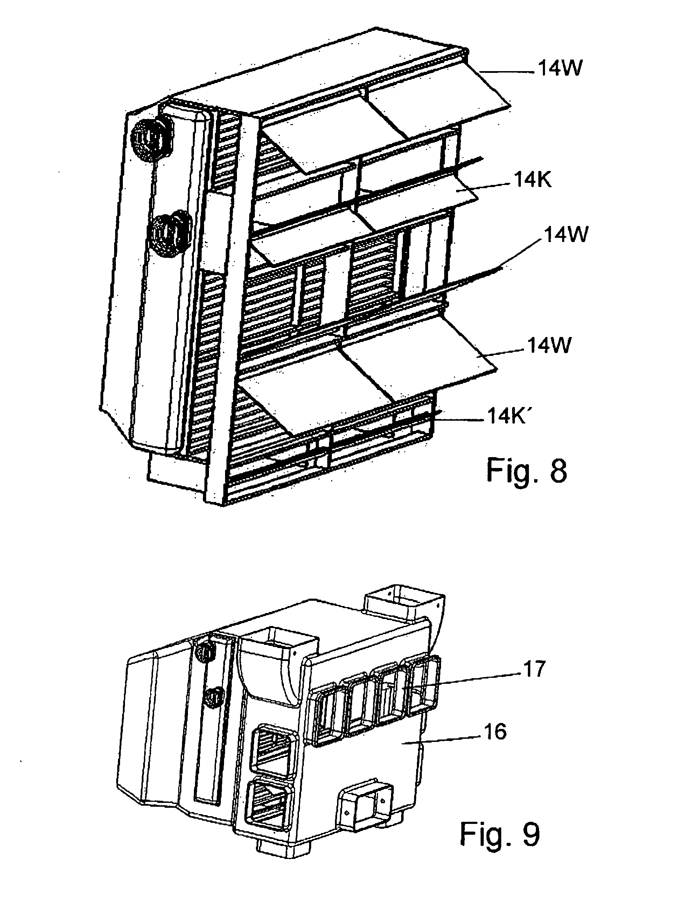

- Fig. 8: eine perspektivische Ansicht eines Teils der Klimaanlage von Fig. 5 ohne Luftführungsgehäuse, und
- Fig. 9: eine Fig. 8 entsprechende perspektivische Ansicht mit Luftführungsgehäuse.

Eine in der Zeichnung nur unvollständig und stark vereinfacht dargestellte Klimaanlage 1 weist gemäß dem ersten Ausführungsbeispiel ein Gebläse, welches Frischluft und/oder Umluft ansaugt, einen Verdampfer, durch welchen die angesaugte Luft vom Gebläse aus gelangt und gekühlt wird, eine vorliegend zweigeteilten Heizeinrichtung 2, welche die durchströmende Luft erwärmt, eine Klappenanordnung 3 aufweisend mehrere Klappen 4, welche der Luftverteilung der vom Verdampfer kommenden kalten Luft auf vorliegend zwei Warmluftpfade W und einen mittig angeordneten Kaltluftpfad K dienen, sowie einen nachfolgend an die Kalt- und Warmluftpfade angeordneten Mischraum 5 auf, von dem aus eine Mehrzahl von Luftkanälen abzweigen. Verdampfer und Heizeinrichtung 2 sind in einem mehrteilig ausgebildeten Gehäuse 6 angeordnet.

Die vom Mischraum 5 ausgehenden Luftkanäle führen zu Düsen im Fahrzeuginnenraum, wie insbesondere zu den Mitteldüsen. Der Einfachheit halber ist vorliegend nur eine Austrittsöffnung 7 zu den Mitteldüsen in der Zeichnung dargestellt. Der Luftkanal zu den Mitteldüsen ist hierbei vorliegend im Wesentlichen in einer Ebene mit dem in der Zeichnung dargestellten Bereich des Kaltluftpfads K angeordnet und sehr kurz ausgebildet, so dass der Mischweg für kalte und warme Luft im Falle einer Mischtemperierung sehr kurz ist.

Die Warmluft-Klappen 4W in den beiden Warmluftpfaden W sind vorliegend als Schmetterlingsklappen ausgebildet mit in einer Ebene angeordneten, spiegelbildlich zur Schwenkachse ausgebildeten Flügeln, jedoch können auch beliebige andere Klappenarten oder Ausgestaltungen von Schmetterlingsklappen verwendet werden.

Die Kaltluft-Klappe 4K weist zwei Klappenflügel mit einer gemeinsamen Schwenkachse S auf, um die sie in entgegengesetzter Richtung verschwenkbar angeordnet sind. Die Anströmung erfolgt von der Seite der Schwenkachse S her. In der Zeichnung ist eine Mischtemperierung dargestellt, bei welcher die Kaltluft-Klappe 4K und die Warmluft-Klappen 4W jeweils teilweise geöffnet bzw. geschlossen sind. In den Endstellungen sind im Falle eines reinen Kühlbetriebs die Warmluft-Klappen 4W quergestellt und verschließen jeweils den entsprechenden Warmluftpfad W während die beiden Klappenflügel der Kaltluft-Klappe 4K aneinander anliegen und so den Kaltluftpfad K vollständig freigeben, während im Falle eines reinen Heizbetriebs die die Warmluft-Klappen 4W in Richtung des entsprechenden Warmluftpfads W ausgerichtet sind und denselben vollständig freigeben während die beiden Klappenflügel der Kaltluft-Klappe 4K den maximal möglichen Winkel zueinander einnehmen und so den Kaltluftpfad K vollständig verschließen.

Um eine möglichst gute Vermischung von kalter und warmer Luft auch bei sehr kurzen Mischwegen sicherstellen zu können, weisen die am Ende des Kaltluftpfades K angeordnete Kaltluft-Klappe 4K sowie das Gehäuse 6 eine besondere Gestalt auf, auf welche im Folgenden näher eingegangen wird.

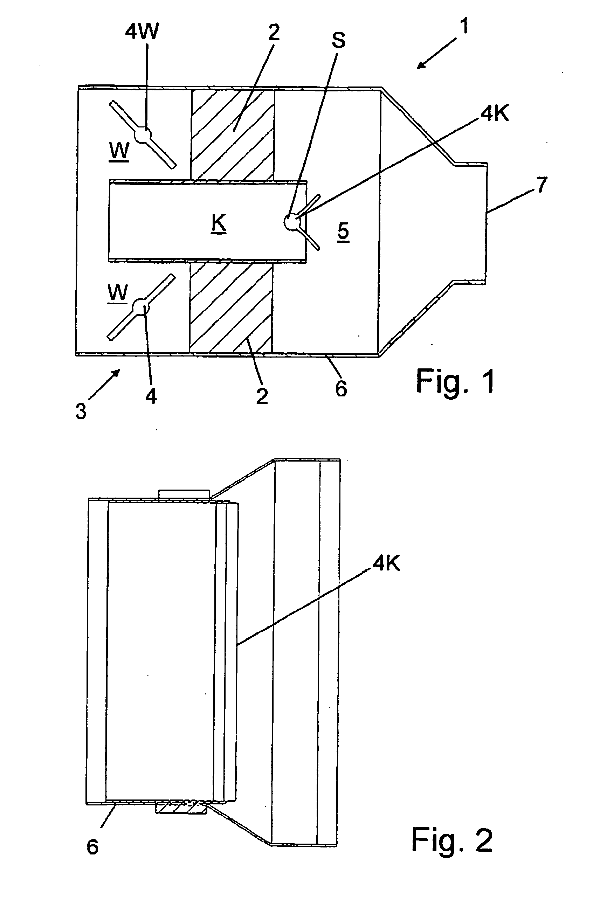

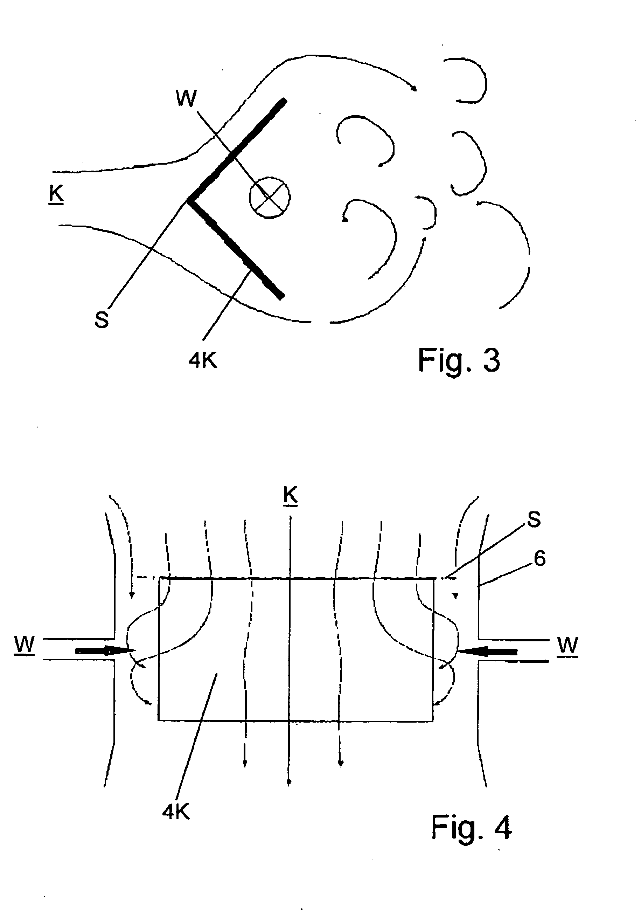

Die Kaltluft-Klappe 4K mit ihren beiden gegeneinander verschwenkbaren Klappenflügein ist derart im Endbereich des Kaltluftpfads K angeordnet, dass die Schwenkachse S derselben leicht beabstandet vom Ende angeordnet ist, die von der Schwenkachse S beabstandeten Enden der Klappenflügel jedoch aus dem Kaltluftpfad K hinausragen, wenn die Klappe nicht vollständig geschlossen ist. Das Gehäuse 6 verbreitert sich zudem, wie aus Fig. 2 ersichtlich, im Bereich des Endbereichs des Kattluftpfads K, so dass jeweils seitlich jeweils ein Spalt um die Klappenflügel herum vorgesehen ist, durch welchen Luft aus den beiden Warmluftpfaden W direkt in die Höhe des Kaltluftpfads K von den Seiten her gelangt. Der Strömungsverlauf der Luft im Falle einer Mischtemperierung ist in den Figuren 3 und 4 angedeutet. Wie aus Fig. 3 ersichtlich, strömt ein Teil der die Klappenflügel umströmenden und sich von denselben an deren Enden ablösenden Luft in den Totraum hinter den Klappenflügeln, wobei sich Wirbel ausbilden. Ferner strömt in Folge des Unterdrucks der Luft im Totraum durch die Spalte seitlich um die Klappenflügel herum Luft in den Totraum, wie durch das symbolisch angedeutete Pfeilende angedeutet. In Folge der instabilen Strömung im Totraum und dem nachfolgenden Bereich kann auf kurzen Wegstrecken eine relativ gute Durchmischung der Luft erfolgen.

Ein entsprechender Effekt, d.h. dass Luft von der Seite her in den Totraum strömt, lässt sich auch durch das Vorsehen von Kanälen zur seitlichen Fortsetzung der Warmluftpfade W erzielen, die ebenfalls in Fig. 4 dargestellt sind. Natürlich sind auch Kombinationen von Spalten und Kanälen möglich, wie in Fig. 4 dargestellt.

Neben der Heizeinrichtung 2, welche mit Hilfe des Motorkühlkreislaufs betrieben wird, kann auch eine parallel hierzu angeordnete, ebenfalls zweigeteilte Zusatzheizeinrichtung vorgesehen sein, welche beispielsweise PTC-Elemente aufweist und insbesondere bei noch nicht durch den Motor erwärmtem Kühlmittel die Heizfunktion übernimmt oder nachfolgend unterstützt.

Gemäß einer nicht in der Zeichnung dargestellten Variante des ersten Ausführungsbeispiels weist die Kaltluft-Klappe eine hohl ausgebildete Achse für die Klappenflügel auf, durch welche Luft aus den Warmluftpfaden einströmen und über die Länge der Achse durch radial in Richtung des Totraums weisende Öffnungen in den durch die Klappenflügel gebildeten Totraum strömen kann.

Eine mehrzonige Klimaanlage 11 gemäß dem zweiten Ausführungsbeispiel weist ein Gebläse (nicht dargestellt), einen Verdampfer 12', durch welchen die angesaugte Luft vom Gebläse aus gelangt und gekühlt wird, eine zweigeteilte Heizeinrichtung 12, welche die durchströmende Luft erwärmt, und eine Klappenanordnung 13 auf. Die Klappenanordnung ist durch mehrere Klappen 14 gebilde, welche der Luftverteilung der vom Verdampfer kommenden kalten Luft auf vorliegend drei Warmluftpfade W, einen mittig zwischen zwei Warmluftpfaden angeordneten, dem Kaltluftpfad des ersten Ausführungsbeispiels entsprechenden Kaltluftpfad K, sowie einen unten angeordneten zweiten Kaltluftpfad K' dienen. Zwischen den beiden unteren Warmluftpfaden W ist eine Trennwand angeordnet, welche die Klimaanlage 11 in einen Frontbereich und einen Fondbereich unterteilt. Eine weitere Trennung kann zwischen Fahrer- und Beifahrerseite vorgesehen sein. Ferner ist ein nachfolgend an die Kalt- und Warmluftpfade angeordneter, durch die Fortführung der Trennwand in einen Frontbereich und einen Fondbereich unterteilter Mischraum 15 vorgesehen, von dem aus eine Mehrzahl von Luftkanälen abzweigen. Verdampfer 12' und Heizeinrichtung 12 sind in einem mehrteilig ausgebildeten Gehäuse 16 angeordnet, welches eine Mehrzahl von Austrittsöffnungen 17 aufweist, über welche die vom entsprechenden Bereich des Mischraum 15 kommende Luft auf zu Düsen im Front- und Fondbereich führende Luftkanäle verteilt wird.

Bei den in den Warmluftpfaden W angeordneten Klappen 14W handelt es sich vorliegend um einflügelige Klappen. Die Schwenkachsen der Warmluft-Klappen 14W sind jeweils in der Nähe der Gehäusewand bzw. Trennwand angeordnet, wobei die Klappen in Luftströmungsrichtung öffnen.

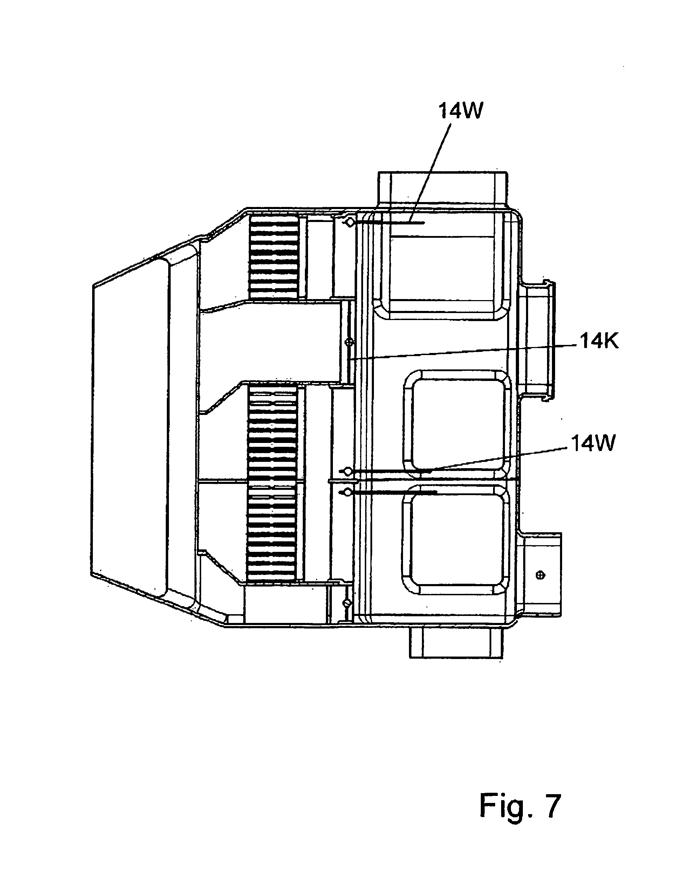

Die Kaltluft-Klappe 14K im oberen Kaltluftpfad K, welcher zwischen der zweigeteilten Heizeinrichtung 12 angeordnet und dem Frontbereich zugeordnete ist, ist entsprechend der Kaltluft-Klappe des ersten Ausführungsbeispiels durch zwei um eine gemeinsame Schwenkachse S verschwenkbare Klappenflügel gebildet, welche zwischen einem Winkel von ca. 0° bis zu einem Winkel von 180° zueinander verschwenkbar sind, so dass sie in der vollständig geöffneten Endstellung den oberen Kaltluftpfad K vollständig verschließen (siehe Fig. 7).

Die im unteren Kaltluftpfad K' angeordnete Kattluft-Klappe 14K', welche dem Fondbereich zugeordnet ist, ist vorliegend durch eine spiegelbildlich zur Schwenkachse ausgebildete Schmetterlingsklappe mit starr zueinander angeordneten Klappenflächen gebildet.

Die Funktion der Klappenanordnung 13 im oberen, dem Frontbereich des Innenraums zugeordneten Bereich der Klimaanlage 11, also im Bereich oberhalb der Trennwand, entspricht im Wesentlichen derjenigen der Klappenanordnung des ersten Ausführungsbeispiels, und durch die untere Kaltluft-Klappe 14' und die im unteren Bereich der unteren Heizeinrichtung 12 angeordnete Warmluft-Klappe ist eine getrennte Regelung der Temperierung des Fondbereichs möglich.

Durch die seitliche Umströmbarkeit der oberen Warmluft-Klappe 14W gelangt vorliegend warme Luft aus dem oberen und unteren, dem Frontbereich zugeordneten Warmluftpfad W direkt in den Totraum hinter der Klappe und damit in den Kernbereich des Kaltluftstroms. Ober- und unterhalb des Kaltluftstroms legt sich die Warmluft der beiden dem Frontbereich zugeordneten Warmluftpfade W an. Insgesamt ergibt sich - insbesondere in Bezug auf den Kernbereich des Kaltluftstroms - eine deutlich gleichmäßigere Temperaturverteilung über den Strömungsquerschnitt in der Austrittsöffnung zur Mitteldüse als ohne Einmischung der Warmluft in den Kaltluftstrom.

Die dem Fondbereich zugeordneten Klappen in Verbindung mit der Ausgestaltung des entsprechenden Bereich des Mischraums führen dagegen zu einem stark geschichteten Luftstrom in Richtung Fondbereich.

Die Ausgestaltung der Klimaanlage kann gemäß einem dritten, nicht in der Zeichnung dargestellten Ausführungsbeispiel auch derart sein, dass - in Umkehrung des ersten Ausführungsbeispiels - zwei Kaltluftpfade und ein zentraler Warmluftpfad mit hinter einer Heizeinrichtung angeordneter Schmetterlingsklappe mit zwei gegeneinander verschwenkbaren Klappenflügeln vorgesehen ist. Da in diesem Fall der Verlauf der äußeren Kaltluftpfade relativ frei ist, können diese von der Seite her einmünden und die weiter oben als Varianten erwähnten Kanäle zum Totraum hinter der Schmetterlingsklappe bilden.

Natürlich kann auch in der Mittelebene der Klimaanlage eine Trennwand zur Trennung von Fahrer- und Beifahrerseite vorgesehen sein, so dass zwei Schmetterlingsklappen mit fluchtenden Schwenkachsen vorgesehen sein können, die unabhängig voneinander betätigbar sind. Das Umströmen der Schmetterlingskfappen kann in diesem Fall von einer oder bei entsprechendem Bauraum und Ausgestaltung der Trennwand von beiden Seiten erfolgen.

## Patentansprüche

1. Klimaanlage, insbesondere für ein Fahrzeug, aufweisend mindestens einen ersten Luftpfad (K) und mindestens einem zweiten Luftpfad (W), welche benachbart angeordnet sind, und die Luftpfade (K, W, K') durch Regelelemente regelbar sind, wobei Im ersten Luftpfad (K) eine Schmetterlingsklappe mit einem Paar gegeneinander um eine gemeinsame Schwenkachse (S) verschwenkbarer Klappenflügel angeordnet ist, die Schwenkachse (S) luftanströmseitig angeordnet ist, die Klappenflügel den ersten Luftpfad (K) im vollständig geöffneten Zustand der Klappenflügel maximal verschließen, und zumindest im teilweise geöffneten Zustand der Klappenflügel, **dadurch gekennzeichnet, dass** die Klappenflügel zwischen sich einen Totraum mit Unterdruck bilden, auf mindestens einer Seite der Schmetterlingsklappe ein Spalt oder Kanal geöffnet ist, über welchen durch den Unterdruck Luft aus dem mindestens einen zweiten Luftpfad (W) in den durch die Klappenflügel gebildeten Totraum unter seitlicher Umgehung der Klappenflügel ansaugbar ist.

2. Klimaanlage nach Anspruch 1, **dadurch gekennzeichnet, dass** zwei zweite Lufftpfade (W) vorgesehen sind, welche auf einander gegenüberliegenden Seiten des ersten Luftpfads (K) angeordnet sind.

3. Klimaanlage nach Anspruch 1 oder 2, **dadurch gekennzeichnet, dass** die Klappenflügel der Schmetterlingsklappe eine Winkelstellung von zwischen 0° und 180° zueinander einnehmen können.

4. Klimaanlage nach einem der vorhergehenden Ansprüche, **dadurch gekennzeichnet, dass** in den anderen Luftpfaden (W, K') Klappen mit starren Klappenflächen angeordnet sind.

5. Klimaanlage nach einem der vorhergehenden Ansprüche, **dadurch gekennzeichnet, dass** in Luftströmungsrichtung gesehen hinter den Klappen (4, 14) ein Mischraum (5, 15) ausgebildet ist, in dessen Wandbereich eine Mehrzahl von Austrittsöffnungen (7, 17) zu Luftkanälen vorgesehen ist.

6. Klimaanlage nach einem der vorhergehenden Anspruch, **dadurch gekennzeichnet, dass** bei teilweise geöffneten Klappenflügeln auf beiden Seiten der Schmetterlingsklappe jeweils ein Spalt und/oder Kanal geöffnet ist, über welchen Luft aus dem mindestens einen zweiten Luftpfad (W) in den durch die Klappenflügel gebildeten Totraum ansaugbar ist.

7. Klimaanlage nach einem der vorhergehenden Ansprüche, **dadurch gekennzeichnet, dass** die Klimaanlage (11) eine Trennwand zur Unterteilung des Luftstroms in einen dem Frontbereich zuzuführenden Teilluftstrom und einen dem Fondbereich zuzuführenden Teilluftstrom aufweist, wobei die Schmetterfingsklappe im dem Frontbereich zuzuführenden Teilluftstrom angeordnet ist.

8. Klimaanlage nach einem der vorhergehenden Ansprüche, **dadurch gekennzeichnet, dass** die im ersten Luftpfad (K) angeordnete Schwenkachse (S) der Schmetterlingsklappe in einer Ebene, insbesondere in der Mittelebene, zwischen den beiden benachbarten Luftpfaden (W) verlaufend angeordnet ist.

9. Klimaanlage nach einem der vorhergehenden Ansprüche, **dadurch gekennzeichnet, dass** die beiden gegeneinander um ihre gemeinsame Schwenkachse (S) verschwenkbaren Klappenflügel der Schmetterlingsklappe in jeder Klappenstellung spiegelbildlich beiderseits einer stationären Mittelebene angeordnet sind.

## Claims

1. An air conditioning system, in particular for a motor vehicle, comprising at least one first air path (K) and at least one second air path (W), which are disposed adjacent to each other, and the air paths (K, W, K') can be controlled by control elements, wherein a butterfly flap comprising a pair of valve flaps swivellable toward each other about a common swivel axis (S) is disposed in the first air path (K) ; the swivel axis (S) is disposed on the air inflow side, the valve flaps close the first air path (K) to a maximum extent in the fully opened state of the valve flaps, and, at least in the partially opened state of the valve flaps, the valve flaps form a dead space with negative pressure therebetween, on at least one side of the butterfly flap a gap or duct is opened, via which air can be drawn in, due to the negative pressure, from the at least one second air path (W) into the dead space formed by the valve flaps, while laterally bypassing the valve flaps.

2. The air conditioning system according to claim 1, **characterized in that** two second air paths (W) are provided, which are disposed on opposite sides of the first air path (K).

3. The air conditioning system according to claim 1 or 2, **characterized in that** the valve flaps of the butterfly valve can assume an angular position of between 0° and 180° relative to each other.

4. The air conditioning system according to one of the preceding claims, **characterized in that** flaps having rigid flap surfaces are disposed in the other air paths
(W, K').

5. The air conditioning system according to one of the preceding claims, **characterized in that** behind the flaps (4, 14), as viewed in the direction of air flow, a mixing chamber (5, 15) is formed, in the wall region of which a plurality of outlet openings (7, 17) to air ducts is provided.

6. The air conditioning system according to one of the preceding claims, **characterized in that**, when the valve flaps are partially opened, a gap and/or duct is opened on both sides of the butterfly valve, via which air can be drawn in from the at least one second air path (W) into the dead space formed by the valve flaps.

7. The air conditioning system according to one of the preceding claims, **characterized in that** the air conditioning system (11) comprises a partition for subdividing the air flow into a partial air stream which is supplied to the front region, and into a partial air stream which is supplied to the rear region, wherein the butterfly valve is disposed in the partial air stream which is supplied to the front region.

8. The air conditioning system according to one of the preceding claims, **characterized in that** the swivel axis (S) of the butterfly valve, which is disposed in the first air path (K), is situated in a plane, in particular in the middle plane, which extends between the two adjacent air paths (W).

9. The air conditioning system according to one of the preceding claims, **characterized in that** the two valve flaps of the butterfly valve, which are swivellable toward each other about their common swivel axis (S), are disposed in every flap position as mirror images on either side of a stationary middle plane.

## Revendications

1. Système de climatisation, en particulier pour un véhicule, présentant au moins une première trajectoire d'air (K) et au moins une deuxième trajectoire d'air (W), qui sont disposées de façon voisine l'une de l'autre, et les trajectoires d'air (K, W, K') sont réglables par des éléments de réglage, où est disposé, dans la première trajectoire d'air (K), un volet papillon comprenant une paire d'ailettes de volet pouvant pivoter autour d'un axe de pivotement (S) commun, en sens inverse l'une par rapport à l'autre, l'axe de pivotement (S) étant disposé côté entrée d'air, les ailettes de volet obturant au maximum la première trajectoire d'air (K) lorsque les ailettes de volet sont en position complètement ouverte, **caractérisé en ce que**, dans la position des ailettes de volet, au moins partiellement ouverte, les ailettes de volet forment entre elles un espace mort soumis à une dépression d'air, **en ce qu'**un intervalle ou canal est ouvert sur au moins un côté du volet papillon, intervalle ou canal par lequel, sous l'effet de la dépression, de l'air provenant de la deuxième trajectoire d'air (W) au moins au nombre de un peut être aspiré dans l'espace mort formé par les ailettes de volet, en contournant latéralement les ailettes de volet.

2. Système de climatisation selon la revendication 1, **caractérisé en ce qu'**il est prévu deux deuxièmes trajectoires d'air (W) qui sont disposées sur des côtés de la première trajectoire d'air (K), placés à l'opposé l'un de l'autre.

3. Système de climatisation selon la revendication 1 ou 2, **caractérisé en ce que** les ailettes du volet papillon peuvent prendre, l'une par rapport à l'autre, une position angulaire comprise entre 0° et 180°.

4. Système de climatisation selon l'une quelconque des revendications précédentes, **caractérisé en ce que** des volets ayant des surfaces de volets fixes sont disposés dans les autres trajectoires d'air (W, K').

5. Système de climatisation selon l'une quelconque des revendications précédentes, **caractérisé en ce qu'**un espace de mélange (5, 15), vu dans la direction de l'écoulement d'air, est configuré derrière les volets (4, 14), espace de mélange ayant une zone de paroi dans laquelle il est prévu une pluralité d'ouvertures de sortie (7, 17) menant à des conduits d'air.

6. Système de climatisation selon l'une quelconque des revendications précédentes, **caractérisé en ce que**, lorsque des ailettes de volet sont partiellement ouvertes, un intervalle et / ou canal est ouvert respectivement des deux côtés du volet papillon, intervalle ou canal par lequel de l'air provenant de la deuxième trajectoire d'air (W) au moins au nombre de un peut être aspiré dans l'espace mort formé par les ailettes de volet.

7. Système de climatisation selon l'une quelconque des revendications précédentes, **caractérisé en ce que** le système de climatisation (11) présente une paroi de réparation servant à la subdivision du flux d'air, en un flux d'air partiel à fournir au secteur avant et en un flux d'air partiel à fournir au secteur arrière, où le volet papillon est disposé dans le flux d'air partiel à fournir au secteur avant.

8. Système de climatisation selon l'une quelconque des revendications précédentes, **caractérisé en ce que** l'axe de pivotement (S) du volet papillon, situé dans la première trajectoire d'air (K), est disposé dans un plan, en particulier dans le plan médian s'étendant entre les deux trajectoires d'air voisines (W).

9. Système de climatisation selon l'une quelconque des revendications précédentes, **caractérisé en ce que** les deux ailettes du volet papillon pouvant pivoter autour de leur axe de pivotement (S) commun, en sens inverse l'une par rapport à l'autre, sont, dans chaque position des ailettes, disposées des deux côtés d'un plan médian fixe, de façon symétrique.
